## Europäisches Patentamt

## European Patent Office

## Office européen des brevets

(19)

(11) Veröffentlichungsnummer: **0 128 119**
**B1**

(12) **EUROPÄISCHE PATENTSCHRIFT**

(45) Veröffentlichungstag der Patentschrift:
**14.10.87**

(51) Int. Cl.⁴: **B 23 K 26/04**

(21) Anmeldenummer: **84810258.8**

(22) Anmeldetag: **25.05.84**

(54) **Verfahren und Vorrichtung zum Fokussieren eines Lichtstrahls, auf ein Objekt.**

(30) Priorität: **01.06.83 CH 2987/83**

(43) Veröffentlichungstag der Anmeldung:
**12.12.84 Patentblatt 84/50**

(45) Bekanntmachung des Hinweises auf die Patenterteilung:
**14.10.87 Patentblatt 87/42**

(84) Benannte Vertragsstaaten:
**CH DE FR GB IT LI**

(56) Entgegenhaltungen:
**FR-E-94 871**
**US-A-3 388 461**
**US-A-3 422 274**
**US-A-3 689 159**

**PATENTS ABSTRACTS OF JAPAN, Band 6, Nr. 267 (M-182)(1145), 25. Dezember 1982, Seite 102 M 182; 2219 Applied Optics, Vol. 22, (1983) June, No. 11, New-York, USA**

(73) Patentinhaber: **CIBA- GEIGY AG, Klybeckstrasse 141, CH- 4002 Basel (CH)**

(72) Erfinder: **Kunz, Rino Ernst, Dr., Im Schibler 18, CH- 8162 Steinmaur (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Vorrichtung zum Fokussieren eines Lichtstrahls, insbesondere eines Laserstrahls, auf ein von diesem beaufschlagtes Objekt gemäss Oberbegriff des Patentanspruchs 1 bzw. 9.

Die Bearbeitung von Werkstücken mittels Laserstrahlen gewinnt immer mehr an Bedeutung. Eines der wesentlichsten Probleme in diesem Zusammenhang besteht darin, den Laserstrahl einerseits optimal auf die zu bearbeitende Oberfläche zu fokussieren und anderseits diese optimale Fokuseinstellung auch stets beizubehalten bzw. entsprechend nachzuregeln.

Schnelligkeit, hohe Empfindlichkeit und höchste Präzision einerseits sowie Langzeitstabilität anderseits sind dabei wesentliche Forderungen.

Durch die Erfindung sollen nun ein diesen Forderungen genügendes Verfahren und eine entsprechende Vorrichtung der eingangs definierten Gattungen zur Verfügung gestellt werden.

Das erfindungsgemässe Verfahren und die erfindungsgemässe Vorrichtung sind in den unabhängigen Patentansprüchen beschrieben. Besonders zweckmässige und vorteilhafte Ausgestaltungen und Weiterbildungen ergeben sich aus den abhängigen Ansprüchen.

Die Erfindung basiert somit auf der Kombination zweier unterschiedlicher Fokussiermethoden, die zwar beide das vom Leuchtfleck auf dem vom Licht- oder Laserstrahl beaufschlagten Objekt zurückgestrahlten Licht erfassen und auswerten, dies aber nach gänzlich verschiedenen Kriterien tun. Bei geeigneter Wahl der beiden Messmethoden ergänzen sich diese gegenseitig derart, dass ihre jeweils inhärenten Fehler und Mängel kompensiert werden bzw. nicht mehr ins Gewicht fallen.

Für die eigentliche laufende Fokuseinstellung bzw. -nachregelung kann eine der in DE-C-20 34 341, US-A-3 689 159, DE-C-24 53 364, FR-A-94 871 oder US-A-3 614 456 beschriebenen Methoden verwendet werden, bei denen der Leuchtfleck über ein Abbildungsobjektiv auf zwei oder mehrere in verschiedenen Abständen zur Bildebene angeordnete oder bezüglich dieser oszillierende Blenden abgebildet und das von den Blenden nicht abgeschattete Licht ausgewertet wird. Ganz besonders zweckmässig und vorteilhaft sind dabei die weiter unten noch näher erläuterten erfindungsgemässen Ausgestaltungen dieser Methoden.

Zur Kalibrierung eignet sich ganz besonders eine weiter unten noch genau beschriebene Methode, welche sich die bei kohärentem Licht auftretende Erscheinung des sog. "Specklings" (Granulierung des vom Leuchtfleck zurückgestrahlten Lichts) zunutze macht. Die physikalische Erscheinung des "Specklings" ist z. B. in den folgenden Literaturstellen beschrieben: R.K. Erf:

"Speckle Metrology", Academic Press (1978)
J.C. Dainty:
"Laser Speckle and Related Phenomena", Springer Verlag (1975)
K.A. Stetson:
"A Review of Speckle Photography and Interferometry", Opt. Eng. 14, 482 (1975)
J.C. Dainty:
"The Statistics of Speckle Patterns" in "Progress in Optics", Vol. 14, pp 3-46 (1976).

Die bisher bekannten Hauptanwendungen der "Speckle"-Methoden sind die Charakterisierung von Oberflächen und die Messung ein Deformationen und Verschiebungen von Testobjekten.

Der Hauptvorteil der Fokussierung nach der "Speckle"-Methode besteht darin, dass diese Methode völlig unempfindlich ist gegenüber der Justierung der optischen Komponenten. Diese Fokussierungsmethode bildet daher eine ideale Ergänzung zu den weiter vorne erwähnten, diesbezüglich sehr kritischen Fokussiermethoden.

Im folgenden wird die Erfindung anhand der Zeichnung näher erläutert.

Es zeigen:

Fig. 1 eine schematische Darstellung einer Laserbearbeitungseinrichtung mit einem mit feststehenden Messblenden arbeitenden Fokussierungssystem,

Fig. 2 den für das Verständnis wesentlichen Ausschnitt aus der Vorrichtung nach Fig. 1 in anderer Darstellung,

Fig. 3a-3d Skizzen und Diagramme zur Erläuterung der Wirkungsweise der Messblenden,

Fig. 4a-4c drei Beispiele für weitere mögliche Messblendenformen,

Fig. 5a und 5b eine alternative Realisierung einer Messblende,

Fig. 6 ein zweites Ausführungsbeispiel der Vorrichtung nach Fig. 1,

Fig. 7 eine Detailvariante,

Fig. 8 ein Prinzipschema zur Herstellung eines holographischen Elements für das Ausführungsbeispiel nach Fig. 6,

Fig. 9 eine schematische Darstellung einer erfindungsgemässen Vorrichtung mit zwei Fokussiersystemen,

Fig. 10 eine besonders zweckmässige Detailvariante der Vorrichtung nach Fig. 9,

Fig. 11 und 12 je ein Prinzipschema von zwei beispielsweisen optischen Anordnungen zur Fokussierung nach der Speckle-Methode und

Fig. 13 ein Prinzipschema einer weiteren Variante.

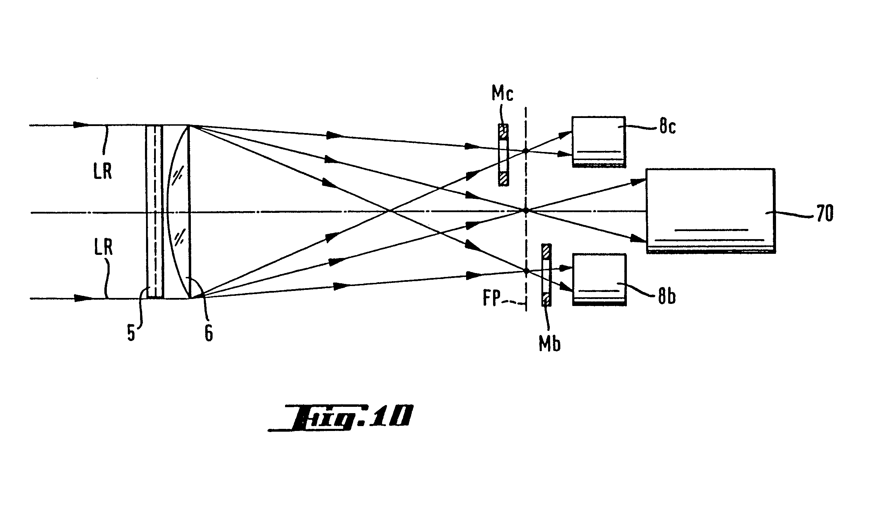

Die in Fig. 9 schematisch dargestellte Laserbearbeitungsvorrichtung stimmt in ihrem grundsätzlichen Aufbau mit dem bekannten Stand der Technik, wie er beispielsweise durch die eingangs erwähnte US-A-3 689 159 gegeben ist, überein, so dass sich die folgende Beschreibung lediglich auf die für die Erfindung wesentlichen Teile konzentrieren kann.

Die gezeigte Vorrichtung umfasst eine Laserquelle 1, welche einen Laserstrahl L über einen halbdurchlässigen Spiegel 2 und eine Fokussierlinse 3 auf ein zu bearbeitendes Werkstück oder Objekt 4 wirft und dort einen je nach Fokussierungszustand mehr oder weniger grossen Leuchtfleck LF erzeugt. Das von diesem Leuchtfleck zurückgeworfene Laserlicht LR gelangt über die Fokussierlinse 3 und den halbdurchlässigen Spiegel 2 sowie einen Strahlenteilerspiegel 2' auf zwei Fokussierdetektorsysteme BS bzw. SPS, die ihrerseits an entsprechende elektronische Auswerte- und Servo-Einrichtungen ASP bzw. AB angeschlossen sind. Letztere wirken über durch Pfeile P1, P2 und P3 angedeutete Verbindungen auf die relativen Lagen des Objekts 4 und/oder der Fokussierlinse 3 und gewünschtenfalls auch auf die Laserquelle 1 selbst und schliessen damit den Regelkreis.

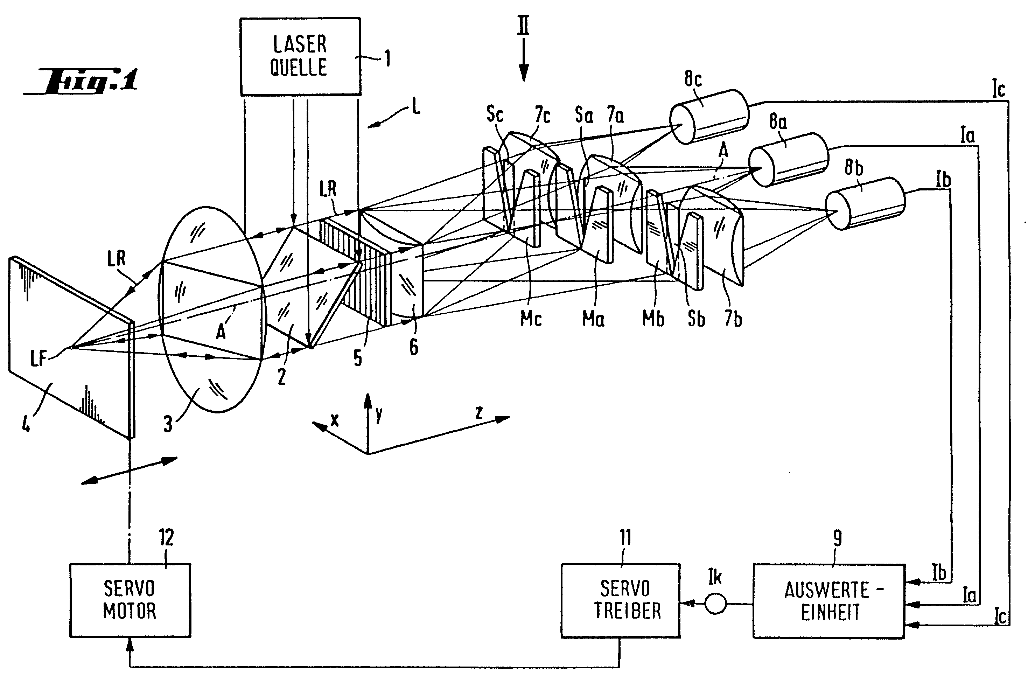

Nähere Details über den Aufbau und die Wirkungsweise des Fokussierdetektorsystems BS gehen aus der folgenden Beschreibung der Fig. 1-8 hervor:

Die in Fig. 1 dargestellte Anordnung zeigt der Übersichtlichkeit halber nur eine Fokussieranordnung. Die gezeigte Vorrichtung umfasst eine Laserlichtquelle 1, welche einen Laserstrahl L über einen halbdurchlässigen Spiegel 2 und eine Fokussierlinse 3 auf ein zu bearbeitendes Werkstück oder Objekt 4 wirft und dort einen je nach Fokussierungszustand mehr oder weniger grossen Leuchtfleck LF erzeugt. Das von diesem Leuchtfleck zurückgeworfene Laserlicht LR gelangt über die Fokussierlinse 3 und den halbdurchlässigen Spiegel 2 auf eine aus einem Beugungsgitter (Strichgitter) 5 und einer Zylinderlinse 6 bestehende Optik, welche den Strahlengang in drei Teile aufspaltet und den Leuchtfleck LF gleichzeitig auf drei seitlich und in Richtung der optischen Achse A (Z-Achse) gegenseitig versetzte Messblenden Ma, Mb und Mc in Form von drei hier vertikalen Linien oder Streifen Sa, Sb und Sc abbildet. Das durch die Messblenden hindurchtretende bzw. von diesen nicht ausgeblendete Licht wird dann mittels dreier weiterer Zylinderlinsen 7a, 7b und 7c auf drei Fotoempfünger 8a, 8b und 8c gerichtet und von diesen gemessen. Die den Intensitäten Ia, Ib und Ic des jeweils gemessenen Lichts entsprechenden elektrischen Signale sind von der Fokuseinstellung abhängig und werden einer Auswertestufe 9 zugeführt, welche daraus ein für den jeweiligen Fokussierungszustand charakteristisches Korrektursignal Ik erzeugt. Dieses Signal wird dann von einer aus einem Servo-Treiber 11 und einem Servo-Antrieb 12 bestehenden Regeleinrichtung dazu verwendet, das Werkstück 4 in Richtung der z-Achse relativ zur Fokussierlinse 3 solange zu verstellen, bis die optimale Fokuseinstellung erreicht ist. Selbstverständlich kann auch die Fokussierlinse relativ zum Werkstück verstellt werden.

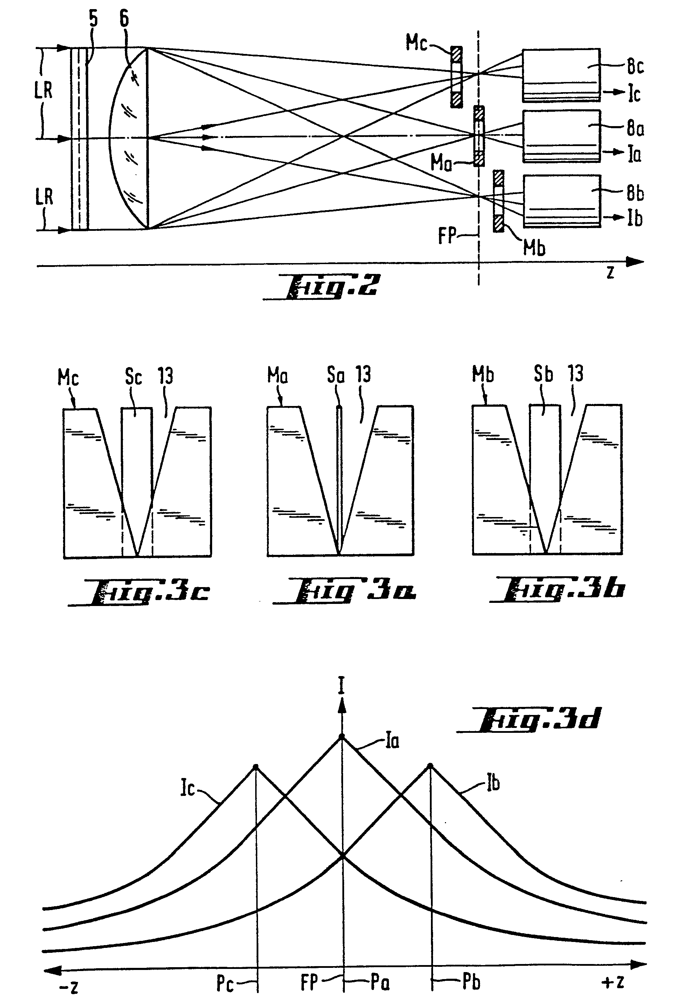

Fig. 2 zeigt die für die Erfindung relevanten Teile der Vorrichtung nach Fig. 1 in Draufsicht, wobei die Zylinderlinsen 7a-7c der Einfachheit halber weggelassen sind. Wie man erkennt, sind die drei Messblenden Ma-Mc, abgesehen von ihrer seitlichen Versetzung, in z-Richtung, d.h. Richtung der optischen Achse des Systems gegenseitig versetzt. Die Messblende Ma befindet sich genau in der Bild- oder Brennebene FP des Systems, in welcher das Bild des Leuchtflecks LF entsteht, wenn der Laserstrahl L exakt bzw. optimal auf das Objekt 4 fokussiert ist; die Position dieser Bildebene FP wird im folgenden als Sollposition bezeichnet. Die Messblende Mb befindet sich etwas hinter der Messblende Ma bzw. der Sollposition FP, die Messblende Mc symmetrisch dazu davor.

Die Wirkungsweise der drei Messblenden Ma-Mc geht aus den Fig. 3a-3d hervor. Jede Messblende ist mit einer V-förmigen Blendenöffnung 13 versehen, die symmetrisch zum zugeordneten Bild Sa, Sb, Sc des Leuchtflecks LF angeordnet ist. Die Darstellung der Fig. 3a-3c entspricht den Verhältnissen optimaler Fokuseinstellung. Das Bild Sa des Leuchtflecks LF entsteht genau am Ort der Blende Ma und ist praktisch ideal linienförmig, sodass es von der Messblende praktisch nicht abgeschattet wird. Das entsprechende Messsignal Ia des Fotoempfängers 8a ist daher maximal. Die beiden anderen Messblenden 8b und 8c befinden sich ausserhalb der exakten Bildebene, sodass also die Bilder Sb und Sc des Leuchtflecks Lf auf ihnen als relativ breite Streifen erscheinen. Aufgrund der Form der Blendenöffnungen 13 wird daher mit zunehmender Streifenbreite ein immer grösserer Teil des Lichts abgeschattet und das Messsignal Ib bzw. Ic der zugeordneten Fotoempfänger wird entsprechend kleiner.

Analog ist die Situation, wenn der Laserstrahl L nicht genau auf das Werkstück 4 fokussiert ist. In diesem Fall entstehen die drei Bilder Sa-Sc des Leuchtflecks LF nicht genau in der Sollposition FP, sondern davor oder dahinter. Entsprechend werden die Messsignale Ia-Ic der drei Fotoempfänger 8a-8c irgendeinen Zwischenwert zwischen ihren möglichen Extremwerten annehmen. In Fig. 3d sind die Verläufe der drei Messsignale Ia-Ic in Abhängigkeit von der Verschiebung der tatsächlichen Bildebene der drei Leuchtfleckbilder gegenüber der Sollposition FP und damit gleichzeitig in Abhängigkeit vom Fokussierungszustand dargestellt. Die Abszissenpunkte Pc, Pa und Pb markieren die Positionen der drei Messblenden Mc, Ma und Mb.

Aus Obigem folgt, dass aus der Grösse der drei Messsignale Ia-Ic auf den jeweiligen Fokussierungszustand geschlossen werden kann. Ist Ic grösser als Ib, befindet sich das Objekt 4 zu weit von der Fokussierlinse 3 weg. Ist umgekehrt Ib grösser als Ic, so ist es zu nahe bei der Linse 3. Der Punkt optimaler Fokussierung ist erreicht, wenn die beiden Messsignale Mb und Mc gleich gross bzw. das Messsignal Ma maximal ist. Weiter ist klar, dass zur Bestimmung der Abweichung vom optimilen Fokuspunkt nach Richtung und Betrag im Prinzip zwei Messblenden allein bereits genügen. Durch Verwendung der dritten Messblende in der Sollposition lässt sich jedoch eine Verbesserung des Kennlinienverlaufs sowie eine Kompensation gewisser Störgrössen wie Änderung der Strahlungsleistung oder der Oberflächeneigenschaften des Objekts 4 erreichen.

Das für den Fokussierzustand charakteristische Korrektursignal Ik kann in der Auswertestufe 9 bei Verwendung von zwei Messblenden Mb und Mc etwa nach der Formel Ik = Ib-Ic und bei Verwendung von allen drei Messblenden Ma-Mc etwa nach der Formel Ik = (Ib-Ic)/Ia berechnet werden.

Wie Fig. 3d zeigt, verläuft der Zusammenhang zwischen Messignal und Fokussierzustand bei Verwendung von V-Messblenden gemäss Fig. 3a-3c in der Nähe des Punkts optimaler Fokussierung im wesentlichen linear. Das Korrektursignal Ik verhält sich ebenso, wobei seine Steilheit und damit die Empfindlichkeit des Systems in der Nähe des Fokuspunkts durch geeignete Formgebung der Messblenden den praktischen Bedürfnissen angepasst werden kann. Selbstverständlich lassen sich durch entsprechende Formgebung der Messblenden und Wahl der optischen Abbildung (z. B. sphärische Linsen) auch nichtlineare Kennlinien realisieren.

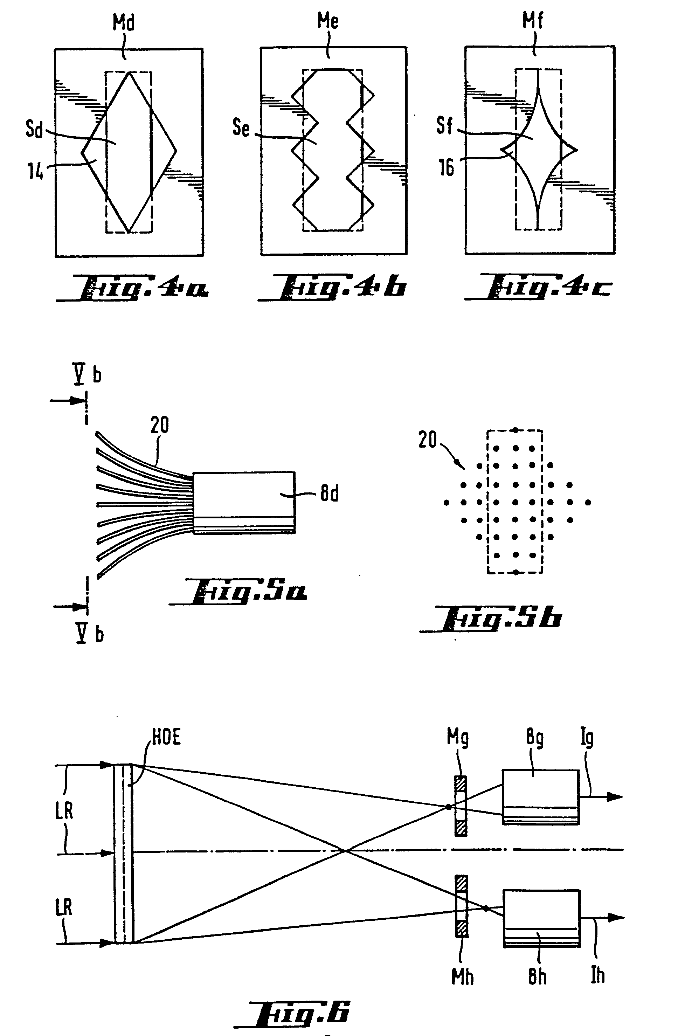

In den Fig. 4a-4c sind drei weitere Ausbildungsmöglichkeiten für die Messblenden dargestellt. Die Messblende Md gemäss Fig. 4a besitzt eine rautenförmige Blendenöffnung 14 und liefert eine doppelt so steile Kennlinie wie die V-Messblenden gemäss den vorangegangenen Erläuterungen. Ähnliches gilt für die Messblende Me in Fig. 4b mit dem Unterschied, dass sie bis zu einer gewissen Mindestabweichung von der optimalen Fokussierung eine regelfreie Totzone aufweist. Die Messblende Mf nach Fig. 4c schliesslich weist eine von konvexen Kanten begrenzte Blendenöffnung 16 auf und liefert eine gekrümmte, in der Nähe des optimalen Fokuspunkt besonders steile Kennlinie.

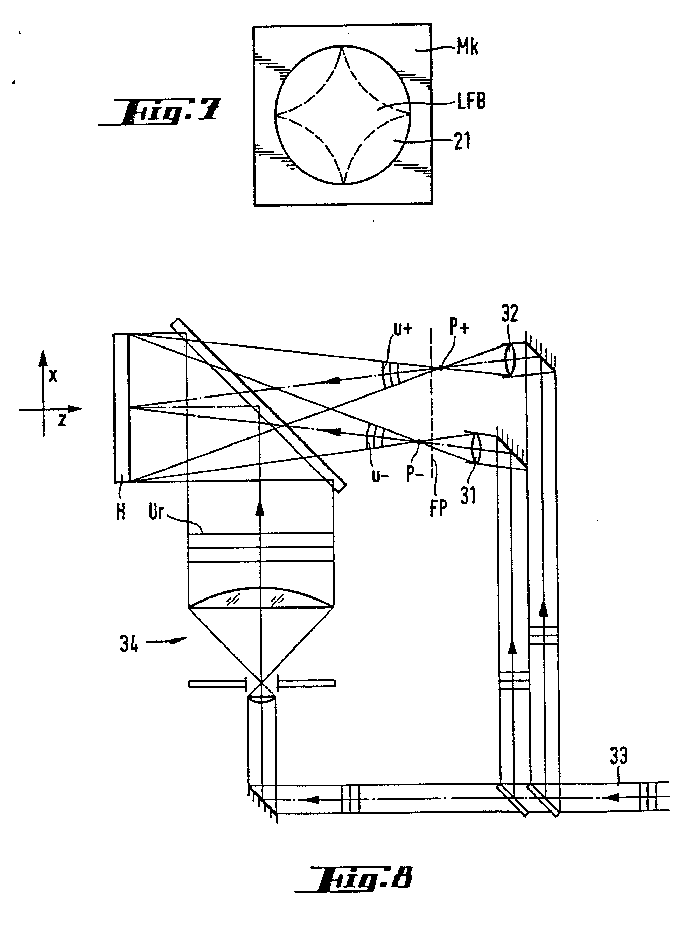

Vorstehend wurde lediglich von transmittierenden Messblenden gesprochen. Es versteht sich, dass selbstverständlich auch reflektierende Messblenden für die Erfindung geeignet sind. Ferner können die Messblenden natürlich auch durch ein entsprechend geformtes Eintrittsfenster der Fotoempfänger oder durch eine entsprechende Ausbildung bzw. Anordnung von Fotoempfängern selbst oder mittels irgendwelcher Lichtleiteranordnungen oder dgl. realisiert sein. Letzteres ist beispielsweise in den Fig. 5a und 5b dargestellt, wo ein Lichtleiterbündel 20 so ausgebildet ist, dass die Lichteintrittsflächen sämtlicher Einzelleiter in einer Ebene liegen und z. B. die in Fig. 5b gezeigte Konfiguration aufweisen. Die anderen Enden der Lichtleiter führen zum Fotoempfänger 8d. Diese Lichtleiteranordnung ist in etwa der Messblende gemäss Fig. 4a äquivalent.

Schliesslich können anstatt der Blenden auch sogenannte Verlauf-Filter entsprechender geometrischer Gestalt eingesetzt werden.

Ferner versteht es sich, dass die Aufspaltung des reflektierten Laserlichts LR in drei Strahlengänge nicht unbedingt mittels eines Beugungsgitters erfolgen muss. Selbstverständlich sind dazu auch andere Mittel wie Strahlenteiler oder Prismen oder dgl. einsetzbar. Ausserdem muss der Leuchtfleck LF auch nicht unbedingt in Form eines Strichs oder Streifens abgebildet werden, sondern es ist natürlich auch jede beliebige andere geometrische Form möglich. Die Abbildung als Linie hat sich jedoch als besonders zweckmässig hinsichtlich des Regelverhaltens des gesamten Systems erwiesen.

Eine ganz besonders vorteilhafte und elegante Art der Abbildung des Leuchtflecks LF besteht in der Verwendung eines Hologramms bzw. Holographisch Optischen Elements. Da ein Hologramm mehrere optische Funktionen gleichzeitig übernehmen kann, ist damit ein besonders kompakter Aufbau der Vorrichtung möglich. In Fig. 6 ist dies an einem mit nur zwei Fotoempfängern ausgestatteten Ausführungsbeispiel der erfindungsgemässen Vorrichtung dargestellt.

Das vom Leuchtfleck reflektierte Licht LR gelangt über die hier nicht gezeichnete Fokussierlinse 3 und den Spiegel 2 auf ein Holographisch Optisches Element HOE. Dieses moduliert das Licht und erzeugt dabei zwei linien- bzw. streifenförmige Abbildungen des Leuchtflecks. Diese Abbildungen könnten in einer Ebene liegen, wobei dann wie bei Fig. 1 und 2 mit axial versetzten Messblenden gearbeitet werden müsste. Im Beispiel nach Fig. 6 liegen die beiden Abbildungen jedoch gegenseitig versetzt, und die beiden Messblenden Mg und Mh liegen in einer Ebene zwischen den beiden Abbildungsebenen des Leuchtflecks. Das von den beiden Messblenden durchgelassene Licht beaufschlagt die beiden Fotoempfänger 8g und 8h, deren Messignale Ig und Ih dann ensprechend den vorstehenden Erläuterungen weiter verarbeitet werden.

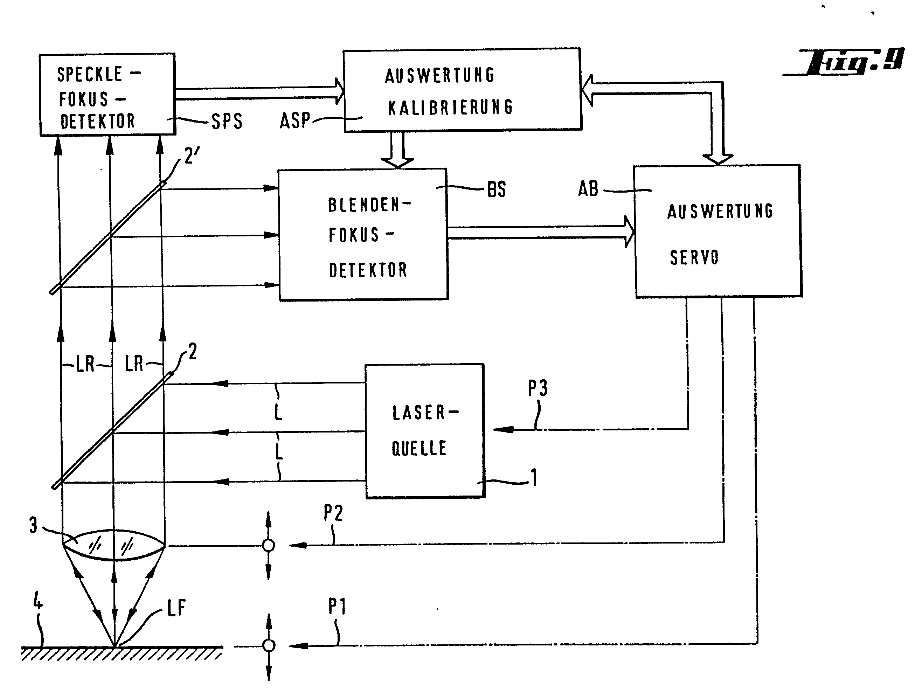

Mit Hilfe des Holographisch Optischen Elements bzw. Hologramms HOE kann die geometrische Form der Bilder des Leuchtflecks ferner so beeinflusst bzw. gewählt werden, dass die Messblenden sehr einfach gestaltet oder überhaupt weggelassen werden können. In Fig. 7 ist dies beispielsweise dargestellt, wobei das Leuchtfleckbild LFB eine etwa sternförmige Gestalt hat und die Blendenöffnung 21 der Messblende Mk kreisrund ist.

Die Herstellung des Hologramms kann nach den üblichen Methoden erfolgen und wird im folgenden rein beispielsweise für ein zwei in Achsenrichtung (und quer dazu) versetzte Bildpunkte erzeugendes Hologramm anhand der Fig. 8 beschrieben.

Zur Erzeugung eines Hologramms mit zwei im Raum angeordneten Bildpunkten $P_+$ und $P_-$ braucht lediglich das Interferenzmuster von diesen beiden Punkten $P_+$ und $P_-$ ausgehender Kugelwellen $u_+$ bzw. $u_-$ mit einer ebenen Referenzwelle Ur auf einer mit einem fotoempfindlichen Aufzeichungsmaterial beschichteten Platte H aufgezeichnet zu werden. Die beiden Kugelwellen $u_+$ und $u_-$ werden mittels zweier Linsen 31 und 32 mit den Punkten $P_+$ und $P_-$ als Brennpunkte aus einem Laserstrahl 33 erzeugt. Analog wird auch die ebene Referenzwelle Ur mittels eines Strahlaufweiters 34 aus dem Laserstrahl 33 abgeleitet.

Die fotografisch entwickelte und fixierte Hologrammplatte H kann nun als Holographisch Optisches Element HOE in der Vorrichtung gemäss Fig. 6 eingesetzt werden und liefert dann bei Beleuchtung von der Gegenseite her (in Fig. 8 von links) die beiden gewünschten Abbildungen des Leuchtflecks.

Die Figuren 11 bis 13 illustrieren die zweite in der erfindungsgemässen Vorrichtung verwendete Fokussierungsmethode, welche die physikalische Erscheinung der "Speckling" ausnutzt.

In der einfachsten Anordnung gemäss Fig. 11 wird die Oberfläche 4a des zu bearbeitenden Objekts oder Werkstücks 4 mit dem mittels der Fokussieroptik 3 fokussierten Laserstrahl L beaufschlagt und das von der Objektoberfläche 4a zurückgestreute Licht LR auf einem seitlich angeordneten Schirm 50 aufgefangen.

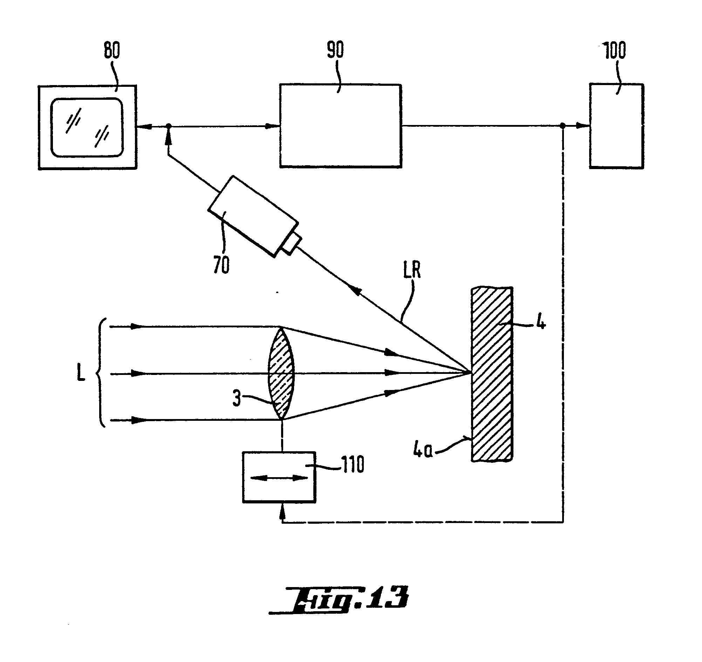

In der Ausführung gemäss Fig. 12 gelangt der Laserstrahl L über den halbdurchlässigen Spiegel 2 und die Fokussieroptik auf die Objektoberfläche 4a, und das rückgestreute Licht 4 tritt ebenfalls durch den Spiegel 2 auf den Schirm 50.

Die auf dem Schirm 50 beobachtete Intensitätsverteilung des vom beleuchten Fleck des Objekts 4 zurückgestreuten Lichts weist eine Granulierung mit statistisch verteilten hellen und dunklen Flecken auf. Diese Granulierung, welche im allgemeinen mit dem englischen Ausdruck "Speckle" oder "Speckling" bezeichnet wird, rührt von der praktisch immer eine gewisse (optische) Rauheit aufweisenden Oberfläche 4a des Objekts 4 her, welche die Phase der beleuchtenden Lichtwelle statistisch räumlich moduliert ("optisches Rauschen"). Die Grösse der einzelnen hellen und dunklen Flecken, also die Grobheit bzw. Feinheit der Granulierung hängt von der Grösse des beleuchteten Flecks auf der Objektoberfläche ab und ist umso grosser (Granulierung gröber), je kleiner die beleuchtete Fläche ist.

Die Erfindung macht sich nun dieses Phänomen zunutze, indem sie die Speckle-Struktur als Indikator für die Fokussierung heranzieht. Da die Kleinheit des beleuchteten Flecks unmittelbar mit der Fokussierung zusammenhängt (ideale Fokussierung $\triangleq$ Fleckdurchmesser minimal), wird nun erfindungsgemäss unter Beobachtung der Granulierung bzw. Speckles auf dem Schirm 50 die Fokussierung solange verstellt, bis die Granulierung am gröbsten ist. Es versteht sich, dass während dieser Einstellung die Intensität bzw. Leistung des Laserstrahls soweit reduziert ist, dass keine ungewollte Bearbeitung der Werkstück-Oberfläche 4a erfolgt.

Bei Verwendung von sichtbarem Licht ist die direkte visuelle Beobachtung der Speckles auf dem Schirm 50 gut möglich, universeller und vorteilhafter ist jedoch die Beobachtung mit fotoelektrischen Mitteln und anschliessende Auswertung der dabei entstehenden elektrischen Signale. Die Fig.13 zeigt eine schematische Darstellung einer dazu geeigneten Vorrichtung.

Der Laserstrahl L trifft wiederum über die Fokussieroptik 3 auf die Werkstück-Oberfläche 4a auf und wird dort zurückgestreut. Das Streulicht 4 wird von einer Fernsehkamera 70 empfangen, welche an einen Fernseh-Monitor 80 und an eine Auswerteeinrichtung 90 angeschlossen ist. Die Fernsehkamera 70 ist ein handelsüblicher Typ, dessen Objektiv entfernt ist, sodass das Streulicht direkt auf die Fernsehröhre auftrifft. Anstatt das Objektiv ganz zu entfernen, kann es in gewissen Fällen auch vorteilhaft sein, das Objektiv nur stark zu defokussieren.

Die Kamera 70 tastet das vom beleuchteten Fleck erzeugte Speckle-Muster zeilenweise ab und erzeugt ein entsprechendes Videosignal, das zusätzlich noch die üblichen Synchronisier-Impulse enthält. Das von der Kamera 70 aufgenommene Speckle-Bild wird auf dem Monitor 80 zur optischen Kontrolle sichtbar gemacht.

Die Auswerteeinrichtung 90 benutzt nun direkt das von der Kamera erzeugte Video-Signal, um den Zustand optimaler Fokussierung zu erkennen und ein entsprechendes Ausgangssignal zu erzeugen, welches dann auf einer Anzeige 100 in geeigneter Weise angezeigt wird.

Als Mass für die Grobheit des Speckle-Bilds kann z. B. die Anzahl der Hell-Dunkel-Übergänge pro Bildzeile herangezogen werden. Somit braucht also für die Fokussierung nur die Anzahl dieser Übergänge gemessen und durch entsprechendes Verschieben der Fokussieroptik 3 (oder des Werkstücks 4) minimalisiert zu werden.

Zur Auswertung des Videosignals in diesem Sinne werden zunächst die Synchronisier-Impulse eliminiert und dann die Signalamplitude mittels eines Schmitt-Triggers mit einem Referenz-Pegel verglichen, der aus dem Mittelwert des Signals über eine oder mehrere Bildzeilen gewonnen und laufend nachgeführt wird. Das vom Schmitt-Trigger dabei erzeugte Rechteck-Signal wird dann in eine entsprechende Spannung umgewandelt und angezeigt, wobei das Spannungsminimum dem Zustand bester Fokussierung entspricht. Präzision und Störsicherheit der Auswertung können erhöht werden, indem das Signal vor dem Schmitt-Trigger mittels geeigneter Übertragungsglieder (Bandpass, Differenzier-Glied) umgeformt wird.

Vorstehend wurde lediglich eine einfache Möglichkeit der fotoelektrischen Speckle-Beobachtung und Auswertung erläutert. Selbstverständlich kann die Analyse des Speckle Bilds noch auf zahlreiche andere Arten erfolgen. Beispielsweise ist es ohne weiteres möglich, die Abtastung des Speckle-Bilds statt mit einer Fernseh-Röhre oder allgemein einer zweidimensionalen, flächigen Fotoempfänger-Anordnung auch nur längs einer einzigen Bildzeile z. B. mittels einer linearen Fotodioden-Anordnung oder im Extremfall sogar nur mittels einer einzigen Fotodiode abzutasten. Wesentlich ist lediglich, dass die mit dem Fokussierungszustand ändernde räumliche Intensitätsmodulation des gestreuten Lichts in irgendeiner Weise quantifiziert und gegebenenfalls angezeigt wird. Weiters ist es auch möglich, die Fokussierung nicht direkt solange zu verändern, bis sich das gröbste Speckle-Muster einstellt, sondern den Verlauf der Grobheit des Speckle-Musters bei mehreren Fokus-Einstellungen zu verfolgen und daraus auf rechnerischem Wege die beste Fokuseinstellung zu ermitteln und dann manuell oder automatisch einzustellen.

Abgesehen von der bequemeren und vor allem genaueren Beobachtung der Speckle hat die fotoelektrische Auswertung derselben gegenüber der visuellen Beobachtung den Vorteil, dass die Wellenlänge des Laserstrahls nicht im sichtbaren Bereich des Spektrums zu liegen braucht. Ferner kommt noch hinzu, dass die Auswerteeinrichtung 9 mit einer Regeleinrichtung 110 zu einem geschlossenen Regelkreis für die vollautomatische Fokussierung zusammengeschaltet werden kann.

Die in Fig. 9 schematisch dargestellte Laserbearbeitungsvorrichtung besitzt, wie schon weiter vorne erwähnt, zwei Fokussiersysteme BS und SPS. Das eine System BS arbeitet mit feststehenden Messblenden gemäss den Fig. 1-8 und dient zusammen mit der Auswerte- und Servoeinrichtung AB zur laufenden Ein- bzw. Nachstellung der Fokussierung. Das andere System SPS ist ein Speckel-System gemäss Fig. 13 und dient zur Kalibrierung des Messblenden-Systems BS. Die Auswerteeinrichtung ASP, welche als Mikroprozessor ausgebildet ist, ist derart gestaltet und arbeitet mit der Auswerteeinrichtung AB derart zusammen, dass sie nach Ermittlung des optimalen Fokuspunkts das Messblendensystem automatisch kalibriert.

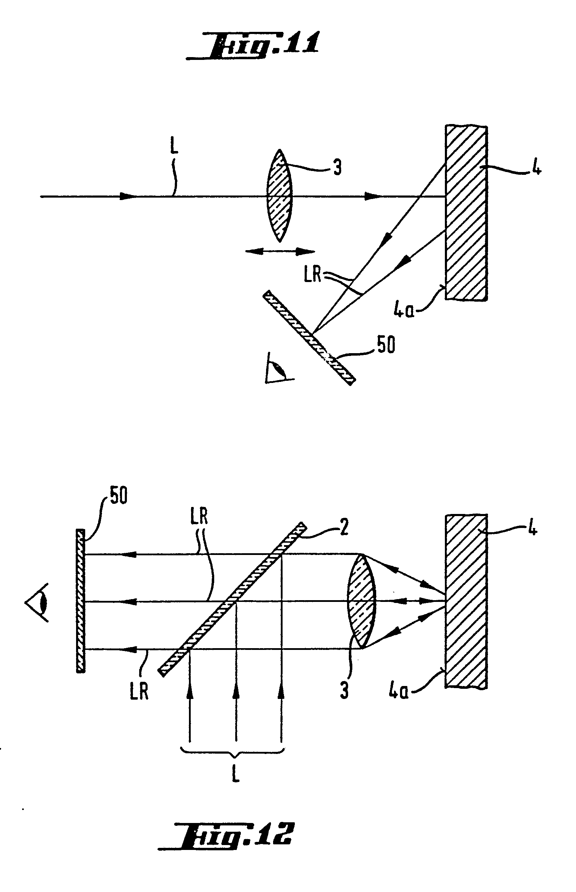

In Fig. 10 ist eine besonders zweckmässige, kompakte optische Anordnung zur praktischen Realisierung der beiden Fokussiersysteme dargestellt. Sie entspricht im wesentlichen der Anordnung gemäss Fig.2 mit der Ausnahme, dass anstelle der mittleren Messblende der Photoempfänger 70 des Speckle-Detektionssystems vorgesehen ist. Das Beugungsbild nullter Ordnung beaufschlagt also den Speckle-Detektor, während die Beugungsbilder höherer Ordnung zur Auswertung mittels Messblenden benutzt werden.

In der Zeichnung sind jeweils nur zwei Fokussiersysteme dargestellt. Selbstwerständlich könnte die Vorrichtung auch mehrere Fokussiersysteme aufweisen, die z. B. die Beugungsbilder des Leuchtflecks verschiedener Ordnungen nach werschiedenen Kriterien auswerten.

Die beschriebene Vorrichtung zeichnet sich durch höchste Präzision in einem weiten Einstellbereich von $<1$ µm bis $>1$ mm aus, ist unempfindlich gegen äussere Störeinflüsse, unabhängig von Polarisation und Winkelverteilung des Lichts, sowohl für plane als auch für nicht-plane Oberflächen praktisch beliebiger Eigenschäften geeignet, benötigt keine zusätzlichen Hilfslichtquellen, besitzt keine zusätzlichen Elemente vor der Fokussierlinse und ist relativ einfach und kompakt aufgebaut.

Zur Erzielung höchster Empfindlichkeit und Stabilität ist es von grösster Wichtigkeit, dass die einzelnen optischen Kanäle des Fokussiersystems möglichst gleichartig in Bezug auf externe Störungen ausgebildet sind. Die erfindungsgemässe Aufspaltung des reflektierten Lichts durch ein Beugungsgitter oder ein entsprechendes holographisches Element gewährleistet dies in höchstem Masse. Auf diese Weise sind höchste Homogenität und Symmetrie der einzelnen optischen Kanäle erreicht.

## Patentansprüche

1. Verfahren zum Fokussieren eines Lichtstrahls, insbesondere eines Laserstrahls auf ein Objekt unter Beobachtung des vom Leuchtfleck auf dem Objekt zurückgestrahlten Lichts, gekennzeichnet durch die Kombination zweier komplementärer Fokussierungsmethoden, von denen die eine zur laufendem Fokuseinstellung werwendet und die andere zeitweise zur Kalibierung der einem Methode benutzt wird, wobei bei der genannten einen Methode vom Leuchtfleck (LF) auf dem Objekt (4) mittels eines optischen Systems wenigstens zwei Bilder (Sa, Sb, Sc) erzeugt werden, jedem solchen Bild eine Messblende (Ma, Mb, Mc) in unterschiedlicher Position relativ zur jeweiligen Sollposition (FP) des Bildes des Leuchtflecks bei optimaler Fokussierung zugeordnet wird, und die Intensität des von den Messblenden nicht ausgeblendeten Lichts gemessen und als Mass für Fokussierung ausgewertet werden sowie die Fokussierung danach eingestellt wird, und wobei bei der genannten anderem Methode die Granulierung (Speckling) des vom der Oberfläche des Objekts zurückgestreuten Lichts beobachtet wird und die Fokussierung anhand der Grobheit der Granulierung eingestellt wird.

2. Verfahren nach Anspruch 1, dadurch gekennzeichnet, dass die wenigstens zwei Bilder (Sa, Sb, Sc) des Leuchtflecks (LF) mittels eines Beugungsgitters (5) oder eines äquivalenten, Holographischen Optischen Elements (HOE) erzeugt werden.

3. Verfahren nach Anspruch 1 oder 2, dadurch gekennzeichnet, dass der Leuchtfleck (LF) durch eine Zylinderlinse (6) oder äquivalente Mittel (HOE) in Form eines je nach Fokussierungszustand mehr oder weniger breiten Lichtstreifens (Sa, Sb, Sc) auf die Messblenden (Ma, Mb, Mc) abgebildet wird.

4. Verfahren nach einem der Ansprüche 1-3, dadurch gekennzeichnet, dass drei Bilder (Sa, Sb, Sc) des Leuchtflecks (LF) erzeugt werden, wobei eine der Messblenden (Mc) vor, eine der Messblenden (Ma) im wesentlichen in und eine der Messblenden (Mb) nach der Sollposition (FP) des Bildes (Sa) des Leuchtflecks (LF) bei optimaler Fokussierung angeordnet ist.

5. Verfahren nach einem der Ansprüche 1-4, dadurch gekennzeichnet, dass die Fokussierung auf maximale Grobheit der Granulierung eingestellt wird.

6. Verfahren nach einem der Ansprüche 1-5, dadurch gekennzeichnet, dass aus dem Verlauf der Grobheit der Granulierung die Fokuseinstellung grösster Grobheit errechnet und dann eingestellt wird.

7. Verfahren nach einem der Ansprüche 1-6, dadurch gekennzeichnet, dass das rückgestreute Licht durch die Fokussieroptik hindurch beobachtet wird.

8. Verfahren nach einem der Ansprüche 1-7, dadurch gekennzeichnet, dass das rückgestreute Licht mit einem Fotoempfänger abgetastet und in entsprechende elektrische Signale umgewandelt wird, und dass diese Signale zur gegebenenfalls automatischen Verstellung der Fokussierung ausgewertet werden.

9. Vorrichtung zum Fokussieren eines Lichtstrahls, insbesondere eines Laserstrahls, auf ein von diesem beaufschlagten Objekt, gekennzeichnet durch die Kombination zweier komplementärer Fokussiersysteme, welche das vom Leuchtfleck auf dem Objekt zurückgestrahlte Licht nach unabhängigen Kriterien zur Ermittlung des Fokussierungszustands auswerten, wobei das eine Fokussiersystem zur laufenden Ein- bzw. Nachstellung der Fokussierung und das andere Fokussiersystem zeitweise zur Kalibrierung des einen Fokussiersystems dient, wobei ferner das gesamte eine Fokussiersystem ein optisches System (5, 6; HOE), welches vom Leuchtfleck (LF) auf dem Objekt (4) wenigstens zwei Bilder (Sa, Sb, Sc) erzeugt, je eine einem Bild zugeordneten Messblende (Ma, Mb, Mc), welche in unterschiedlichen positionen relativ zu den jeweiligen Sollpositionen (FP) der Bilder (Sa, Sb, Sc) des Leuchtflecks (LF) bei optimaler Fokussierung angeordnet sind, und optoelektrische Mittel (8a, 8b, 8c, 9), welche das von den Messblenden nicht ausgeblendete Licht messen und daraus ein für den Fokussierungszustand charakteristisches Signal (Ik) erzeugen, umfasst, und wobei ferner das genannte andere Fokussiersystem einen Fotoempfänger (70) umfasst, der vom von der Oberfläche (4a) des Objekts (4) zurückgestreutem Licht (LR) beaufschlagt wird, und der Fotoempfänger (70) an eine elektronische Auswerteeinrichtung (90) angeschlossen ist, welche ein der Grobheit der Granulierung des rückgestreuten Lichts entsprechendes Ausgangssignal erzeugt.

10. Vorrichtung nach Anspruch 9, dadurch gekennzeichnet, dass das optische System ein Beugungsgitter (5) oder ein äquivalentes Holographisches Optisches Element (HOE) umfasst.

11. Vorrichtung nach Anspruch 9 oder 10, dadurch gekennzeichnet, dass das optische System (5, 6; HOE) den Leuchtfleck (LF) in Form eines je nach Fokussierungszustand des Lichtstrahls mehr oder weniger breiten Lichtstreifens (Sa, Sb, Sc) auf die Messblenden (Ma, Mb, Mc) abbildet.

12. Vorrichtung nach einem der Ansprüche 9-11, gekennzeichnet durch Regelmittel (11, 12), welche die Fokussierung des Objekts (4) in Abhängigkeit des von den opto-elektrischen Mitteln (8a, 8b, 8c, 9) erzeugten charakteristischen Signals (Ik) automatisch optimieren.

13. Vorrichtung nach einem der Ansprüche 9-12, dadurch gekennzeichnet, dass drei Messblenden (Ma, Mb, Mc) vorhanden sind, vobei eine der Messblenden (Mc) vor, eine Messblende (Ma) im wesentlichen in und eine Messblende (Mb) nach der Sollposition (FP) des Bildes des Leuchtflecks (LF) bei optimal fokussiertem Licht angeordnet ist.

14. Vorrichtung nach einem der Ansprüche 9-13, dadurch gekennzeichnet, dass eine mit der Auswerteeinrichtung (90) zusammenarbeitende Regeleinrichtung (110) vorgesehen ist, welche die Fokussierung des Lichtstrahls auf maximale Grobheit der Granulierung des rückgestreuten Lichts einstellt.

15. Vorrichtung nach einem der Ansprüche 9-14, dadurch gekennzeichnet, dass der Fotoempfänger eine zweidimensionale Anordnung einer Vielzahl von Fotodioden oder dgl. oder eine Videokamera (70) ist.

16. Vorrichtung nach einem der Ansprüche 9-15, dadurch gekennzeichnet, dass die Auswerteeinrichtung (90) die der grössten Grobheit der Granulierung entsprechende Fokuseinstellung aus dem Verlauf der Grobheit rechnerisch ermittelt.

17. Vorrichtung nach einem der Ansprüche 9-16, dadurch gekennzeichnet, dass eine automatische Kalibriereinrichtung (ASP) vorgesehen ist, welche das genannte eine Fokussystem automatisch anhand der vom genannten anderen Fokussiersystem ermittelten optimalen Fokuseinstellung kalibriert.

18. Vorrichtung nach einem der Ansprüche 9-17, dadurch gekennzeichnet, dass das Beugungsgitter (5) oder das äquivalente Holographische Optische Element (HOE) wenigstens drei Bilder des Leuchtflecks erzeugt und dass der Fotoempfänger (70) des genannten anderen Fokussierungssystems mit Licht aus wenigstens einem dieser drei Bilder beaufschlagt ist.

19. Vorrichtung nach Anspruch 18, dadurch gekennzeichnet, dass das Beugungsgitter oder das Holographische Optische Element ein Beugungsbild nullter und zwei Beugungsbilder erster Ordnung erzeugt und dass der Fotoempfänger des genannten anderen Fokussierungssystems mit Licht aus dem Beugungsbild nullter Ordnung beaufschlagt ist.

**Claims**

1. Process for the focusing of a beam of light, in particular a laser beam, onto an object while observing the light reflected by the luminous spot onto the object, characterized by the combination of two complementary focusing methods, one of which is used for continuous focusing and the other for intermittent calibration of the first method, wherein in the first method at least two images (Sa, Sb, Sc) are produced by the luminous spot (LF) on the object (4) by means of an optical system, a measuring diaphragm (Ma, Mb, Mc) assigned to each of said images in different positions relative to the desired position (FP) of the image of the luminous spot in case of optimum focusing, and the intensity of the light not blanked out by the measuring diaphragms measured and evaluated as a measure of focusing and used to carry out the focusing in keeping with said measure, and wherein in the said other method the speckling of the light back-scattered by the surface of the object is observed and the focusing adjusted by means of the coarseness of said speckling.

2. Process according to Claim 1, characterized in that the at least two images (Sa, Sb, Sc) of the luminous spot (LF) are produced by means of a diffraction grid (5) or an equivalent holographic optical element (HOE).

3. Process according to Claim 1 or 2, characterized in that the luminous spot (LF) is imaged by a cylindrical lens (6) or equivalent means (HOE) in the form of strips of light (Sa, Sb, Sc) with their width varying in keeping with the focusing state, onto the neasuring diaphragms (Ma, Mb, Mc).

4. Process according to one of Claims 1-3, characterized in that three images (Sa, Sb, Sc) of the luminous spot (LF) are produced, with one of the measuring diaphragms (Mc) being located in front of, one of the measuring diaphragms (Ma) essentially in and one of the measuring disphragms (Mb) after the desired position (FP) of the image (Sa) of the luminous spot (LF) in case of optimum focusing.

5. Process according to one of Claims 1-4, characterized in that the focusing is adjusted to the maximum coarseness of speckling.

6. Process according to one of Claims 1-5, characterized in that from the variation of the coarseness of the speckling the focus setting of greatest coarseness may be calculated and set accordingly.

7. Process according to one of Claims 1-6, characterized in that the back-scattered light is observed through the focusing optical device.

8. Process according to one of Claims 1-7, characterized in that the back-scattered light is scanned by means of a photoreceiver and converted into corresponding electrical signals, and that these signals are evaluated for a possible automatic adjustment of focusing.

9. Apparatus for the focusing of a beam of light, in particular a laser beam, on an object exposed to said beam, characterized by the combination of two complimentary focusing systems which evaluate the light back-scattered by the luminous spot on the object in keeping with independent criteria to determine the state of focusing, wherein one focusing system serves to continuously set and readjust the focusing, and the other focusing system is used to intermittently calibrate the first focusing system, wherein further the entire first focusing system comprises an optical system (5, 6; HOE) producing at least two images (Sa, Sb, Sc) of the luminous spot (LF) on the object (4), at least one measuring diaphragm (Ma, Mb, Mc) assigned to each of said images and located in different positions relative to the desired positions (FP) of the images (Sa, Sb, Sc) of the luminous spot (LF) in case of optimum focusing, and opto-electrical means (8a, 8b, 8c, 9) to measure the light not blanked out by the measuring diaphragms and to produce from it a signal (Ik) characteristic of the state of focusing, and wherein further the entire other focusing system comprises a photoreceiver (70) exposed to the light back-scattered from the surface (4a) of the object (4), said photoreceiver (70) being connected with an electronic evaluating device (90) producing an output signal corresponding to the coarseness of the speckling of the back-scattered light.

10. Apparatus according to Claim 9, characterized in that the optical system comprises a diffraction grid (5) or an equivalent holographic optical element (HOE).

11. Apparatus according to Claim 9 and 10, characterized in that the optical system (5, 6; HOE) images the luminous spot (LF) in the form of a strip of light (Sa, Sb, Sc) on the measuring diaphragms (Ma, Mb, Mc), the width of said strips of light being a function of the state of focusing of the beam of light.

12. Apparatus according to one of Claims 9-11, characterized by control means (11, 12) which optimize the focusing of the object (4) automatically as a function of the characteristic signal (Ik) produced by the opto-electrical means (8a, 8b, 8c, 9).

13. Apparatus according to one of Claims 9-12, characterized in that three measuring diaphragms (Ma, Mb, Mc) are present, with one of the measuring diaphragms (Mc) being located in front of, one measuring diaphragm (Ma) essentially in and one measuring diaphragm (Mb) after the desired position (FP) of the image of the luminous spot (LF) in case of an optimally focused light.

14. Apparatus according to one of Claims 9-13, characterized in that a control device (110) cooperating with the evaluating device (90) is provided, said control device adjusting the focusing of the beam of light to the maximum coarseness of the speckling of the back-scattered light.

15. Apparatus according to one of Claims 9-14, characterized in that the photoreceiver is a two-dimensional layout of a plurality of photodiodes or the like, or a video camera (70).

16. Apparatus according to one of Claims 9-15, characterized in that the evaluating device (90) determines the focusing setting corresponding to the greatest coarseness of the speckling by calculation from the variation of coarseness.

17. Apparatus according to one of Claims 9-16, characterized in that an automatic calibration device (ASP) is provided, said calibration device calibrating the said first focusing system automatically by means of the optimum focusing setting determined by the said other focusing system.

18. Apparatus according to one of Claims 9-17, characterized in that the diffraction grid (5) or the equivalent holographic optical element (HOE) produces at least three images of the luminous spot and that the photoreceiver (70) of the said other focusing system is exposed to light from at least one of said three images.

19. Apparatus according to Claim 18, characterized in that the diffraction grid or holographic optical element produces a diffraction image of zero order and two diffraction images of first order and that the photoreceiver of the said other focusing system is exposed to light from the zero order diffraction image.

**Revendications**

1. Procédé pour la focalisation d'un rayon lumineux en particulier d'un rayon laser, sur un objet, par observation de la lumière réfléchie vers l'arrière par la tache lumineuse située sur l'objet, procédé caractérisé par la combinaison de deux méthodes de focalisation complémentaires dont l'une est utilisée pour le réglage en continu de la focalisation et l'autre est employée pour le calibrage d'étalonnage de la première, et dans la première méthode citée, au moins deux images (Sa, Sb, Sc) de la tache lumineuse (LF) située sur l'objet (4) sont produites au moyen d'un système optique, un diaphragme de mesure (Ma, Mb, Mc) étant affecté à chacune de ces images et étant placé en position différente par rapport à la position prescrite (FP) du moment, pour l'image de la tache lumineuse en focalisation optimale, et l'intensité de la lumière non occultée par les diaphragmes de mesure étant mesurée et exploitée en tant que mesure de la focalisation, avec réglage en conséquence de la focalisation et, dans l'autre ou seconde méthode, la granulation (moucheture ou "speckling") de la lumière diffusée vers l'arrière par la surface de l'objet étant observée et la focalisation étant réglée en fonction de l'aspect grossier de la granulation.

2. Procédé selon la revendication 1, caractérisé par le fait qu'au moins deux images (Sa, Sb, Sc) de la tache lumineuse (LF) sont produites au moyen d'un reseau de diffraction (5) ou d'un élément optique holographique (HOE) équivalent.

3. Procédé selon la revendication 1 ou 2, caractérisé par le fait que la tache lumineuse (LF) est représentée, grâce à une lentille cylindrique (6) ou a des moyens équivalents (HOE), sous la forme d'une bande de lumière (Sa, Sb, Sc) plus ou moins large selon l'état de la focalisation sur les diaphragmes (Ma, Mb, Mc) de mesure.

4. Procédé selon l'une des revendications 1 à 3, caractérisé par le fait que trois images (Sa, Sb, Sc) de la tache lumineuse (LF) sont produites, un des diaphragmes (Mc) de mesure étant disposé en avant de la position prescrite (FP) de l'image (Sa) de la tache lumineuse (LF) lorsque la focalisation est optimale, un des diaphragmes (Ma) de mesure étant disposé sensiblement sur cette position et un des diaphragmes (Mb) de mesure étant disposé en arrière de cette position.

5. Procédé selon l'une des revendications 1 à 4, caractérisé par le fait que la focalisation est réglée en fonction de l'aspect le plus grossier de la granulation.

6. Procédé selon l'une des revendications 1 à 5, caractérisé par le fait que l'on calcule la focalisation correspondant à l'aspect le plus grossier d'après l'évolution de l'aspect grossier de la granulation, et qu'on obtient ensuite cette focalisation par réglage.

7. Procédé selon l'une des revendications 1 à 6, caractérisé par le fait que la lumière dispersée vers l'arrière est observée à travers l'optique de focalisation.

8. Procédé selon l'une des revendications 1 à 7, caractérisé par le fait que la lumière réfléchie et diffusée vers l'arrière est explorée avec un photo-récepteur et transformée en signaux électriques correspondants, et que ces signaux sont exploités pour le réglage, le cas échéant automatique, de la focalisation.

9. Installation pour la focalisation d'un rayon lumineux, en particulier d'un rayon laser sur un objet frappé par ce dernier, caractérisée par la combinaison de deux systèmes de focalisation complémentaires qui exploitent la lumière rayonnée en arrière par la tache lumineuse située sur l'objet, en appliquant des critères indépendant pour déterminer l'état de la focalisation, un des systèmes de focalisation étant employé pour le réglage initial ou le réglage ultérieur en continu de la focalisation, et l'autre système de focalisation, servant au calibrage périodique du premier système, l'ensemble d'un premier système de focalisation comprenant un système optique (5; 6; HOE) qui produit à partir de la tache lumineuse (LF) située sur l'objet (4) au moins deux images (Sa, Sb, Sc), au moins deux diaphragmes (Ma, Mb, Mc) de mesure affectés chacun à une image, qui sont disposés dans des positions différentes par rapport aux positions (FP) prescrites du moment pour les images (Sa, Sb, Sc) de la tache lumineuse (LF) lorsque la focalisation est optimale, et des moyens opto-électriques (8a, 8b, 8c, 9), qui mesurent la lumière non occultée par les diaphragmes de mesure et en tirent un signal (Ik) caractéristique de l'état de la focalisation, et, de plus, l'autre ou second système de focalisation comprenant un photo-récepteur (70) qui est frappé par la lumière (LR) diffusée vers l'arrière à partir de la surface (4a) de l'objet (4), le photo-récepteur (70) étant raccordé à un dispositif d'exploitation électronique (90) qui produit un signal de sortie en correspondance avec l'aspect grossier de la granulation de la lumière renvoyée dispersée vers l'arrière.

10. Installation selon la revendication 9, caractérisée par le fait que le système optique comprend un réseau (5) de diffraction ou un élément optique holographique (HDE) équivalent.

11. Installation selon les revendications 9 ou 10, caractérisée par le fait que le système optique (5, 6; HOE) représente la tache lumineuse (LF) sous la forme d'une bande de lumière (Sa, Sb, Sc) plus ou moins large selon le degré de focalisation du rayon de lumière sur les écrans (Ma, Mb, Mc) de mesure.

12. Installation selon l'une des revendications 1 à 11, caractérisée par des moyens (11, 12) de réglage, qui optimisent automatiquement la focalisation de l'objet (4) en fonction du signal caractéristique (Ik) produit par les moyens opto-électriques (8a, 8b, 8c, 9).

13. Installation selon l'une des revendications 9 à 12, caractérisée par le fait que trois diaphragmes (Ma, Mb, Mc) de mesure sont présents, un des diaphragmes (Mc) mesure étant disposé en avant de la position prescrite (FP) de l'image de la tache lumineuse lorsque la lumière est focalisée de façon optimale, un diaphragme (Ma) de mesure étant disposé sensiblement sur cette position et un diaphragme (Mb) de mesure étant disposé en arrière de cette position.

14. Installation selon une des revendications 9 à 13, caractérisée par le fait qu'on prévoit un dispositif (110) de réglage travaillant en conjugaison avec le dispositif (90) d'exploitation, et qu'on règle la focalisation du rayon lumineux de manière à obtenir l'aspect le plus grossier de la granulation de la lumière dispersée vers l'arrière.

15. Installation selon l'une des revendications 9 à 14, caractérisée par le fait que le photo-récepteur est un dispositif à deux dimensions comportant un grand nombre de photo-diodes ou similaires, ou une caméra vidéo (70).

16. Installation selon une des revendications 9 à 15, caractérisée par le fait que le dispositif (90) d'exploitation détermine par le calcul, à partir de l'évolution de l'aspect grossier, le réglage de la focalisation correspondant à l'aspect le plus grossier de la granulation.

17. Installation selon l'une des revendications 9 à 16, caractérisée par le fait qu'on prévoit un dispositif de calibrage automatique (ASP) qui calibre le premier système de focalisation cité, automatiquement sur la base du réglage de focalisation optimal déterminé par l'autre système de focalisation cité.

18. Installation selon l'une des revendications 9 à 17, caractérisée par le fait que le réseau (5) de diffraction ou l'élément optique holographique (HOE) équivalent produit au moins trois images de la tache lumineuse et que le photo-récepteur (70) de l'autre système de focalisation cité est frappé par la lumière d'au moins une de ces trois images.

19. Installation selon la revendication 18, caractérisée par le fait que le réseau de diffraction ou l'élément optique holographique produit une image de diffraction d'ordre zéro et deux images de diffraction d'ordre un, et que le photo-récepteur de l'autre système de focalisation cité est frappé par la lumière provenant de l'image de diffraction d'ordre zéro.

Fig. 1

**Fig.2**

**Fig.3c**

**Fig.3a**

**Fig.3b**

**Fig.3d**

Md

Sd

14

**Fig.4a**

Me

Se

**Fig.4b**

Mf

Sf

16

**Fig.4c**

Vb

20

8d

**Fig.5a**

20

**Fig.5b**

HOE

Mg  8g  Ig

LR

LR

Mh  8h  Ih

**Fig.6**

Fig.7

Fig.8

Fig. 9

0 128 119

**Fig. 10**

**_Fig.11_**

**_Fig.12_**

_Fig.13_